# EUROPÄISCHE PATENTSCHRIFT

(11) **EP 2 123 582 B1**
(45) Veröffentlichungstag und Bekanntmachung des Hinweises auf die Patenterteilung: **22.01.2014**
(21) Anmeldenummer: 09006672.1
(22) Anmeldetag: 18.05.2009
(51) Int. Cl.: B65G 69/00

(54) **Torabdichtung,Gebäudeöffnungen,Verfahren zum Beladen und/oder Entladen eines Frachtbehälters**
Door seal, building openeing, method for loading and/or unloading a freight container
Etanchéification de portail, ouverture de bâtiment, procédé pour le chargement et le déchargement d'un conteneur de fret.

(30) Priorität: 19.05.2008 DE 102008024152
(43) Veröffentlichungstag der Anmeldung: 25.11.2009
(73) Patentinhaber: Grunewald, Niclas, 20146 Hamburg (DE)
(72) Erfinder: Grunewald, Niclas, 20146 Hamburg (DE)
(74) Vertreter: Vonnemann, Gerhard

(56) Entgegenhaltungen:
- EP-A- 1 445 222
- CH-A5- 600 117
- DE-A1- 2 555 201
- DE-A1- 3 049 358

## Beschreibung

Die Erfindung betrifft eine Torabdichtungssystem, bestehend aus einer Torabdichtung und einer Führung, insbesondere für ebenerdige Gebäudeöffnungen in einer Gebäudewand zum Abdichten eines Spaltes zwischen der Gebäudeöffnung und einer Ladeöffnung eines Frachtbehälters, vorzugsweise eines Containers, wobei die Torabdichtung in einer Führung verschieblich gehalten ist, die eine Verschieberichtung vorgebend ausgebildet ist.

Außerdem betrifft die Erfindung eine Gebäudeöffnung mit einer Torabdichtung für das Be- und/oder Entladen von Frachtbehältern insbesondere Containern, wobei die Gebäudeöffnung im wesentlichen ebenerdig angeordnet ist und zwischen der Torabdichtung und der Gebäudewand mindestens eine Führung vorgesehen ist, in der die Torabdichtung verschieblich gehalten ist, wobei die Führung die Richtung des Verschiebeweges vorgebend ausgebildet ist,

Schließlich betrifft die Erfindung ein Verfahren zum Beladen und/oder Entladen eines ebenerdig abgestellten Frachtbehälters, insbesondere eines Containers.

Gebäudeöffnungen, die an die Anforderungen einer modernen Logistik angepasst sind, sind beispielsweise aus der den Schriften DE 103 05 565 A1, DT 25 55 201 A1, das den Oberbegriff von Ansprüchen 1, 9 und 13 offenbart, oder DE 30 49 358 C2 bekannt. Damit die Transportvorgänge zwischen Transportbehältern und den Gebäuden moderner Logistikcenter ungestört ablaufen können, werden die notwendigen Spalte zwischen Gebäuden und Transportbehältern durch Torabdichtung geschlossen. Niveauunterschiede zwischen dem Boden der Transportbehältern und den Gebäuden wird durch eine entsprechende Rampenhöhe Rechnung getragen. Das Flurniveau des Gebäudes entspricht dann der Rampenhöhe und unterscheidet sich um diesen Betrag von dem Niveau der davor liegenden Verkehrsfläche, auf der die Fahrzeuge mit den Transportbehältern rangieren. Ein etwaiger zusätzlicher Niveauausgleich erfolgt mittels Überladebrücken, die in die Rampe vor den Gebäudeöffnungen eingebaut sind und ein direktes Befahren der Transportbehälter mit Flurförderzeugen aus den Gebäuden heraus erlauben. Patentschrift CH 600117 A5 schlägt wenigstens einen Teil des Dichtelements bezüglich einer Toröffnung vertikal verschiebbar auszubilden vor.

Frachtbehälter, die von ihren Transportfahrzeugen getrennt werden können, wie zum Beispiel Container, müssen vor der Rampe auf Pritschen oder auf speziellen dafür konstruierten Gestelln abgestellt werden. Die Handhabung solcher Gestelle, deren Lagerung und deren Vorhaltung bedeutet für Logistikunternehmen einen erheblichen Aufwand. Zur Lösung dieser Probleme sind beispielsweise Fahrzeugkonstruktionen vorgeschlagen worden, die die Behälter autark ebenerdig auf der Verkehrsfläche abstellen. Zum Transport solcher ebenerdig abgestellter Behälter werden Portalkräne oder Teleskopstapler u.a. Fördermittel eingesetzt. Die Aufbauten solcher Transportfahrzeuge oder Fördermittel können jedoch mit den Torabdichtung an den Gebäudeöffnungen kollidieren. Dabei nehmen die Torabdichtungen Schaden und die Betriebsabläufe werden gestört.

Es besteht somit einen dringendes Bedürfnis an einer Gebäudeöffnung und einer Torabdichtung, die nicht durch die Transportfahrzeuge Schaden nehmen können oder die sich in die Betriebsabläufe moderner Logistik einfügen lassen.

Bei einem Torabdichtungssystem, bestehend aus einer Torabdichtung und einer Führung, insbesondere für ebenerdige Gebäudeöffnungen in einer Gebäudewand zum Abdichten eines Spaltes zwischen der Gebäudeöffnung und einer Ladeöffnung eines Frachtbehälters, vorzugsweise eines Containers, wobei die Torabdichtung in einer Führung verschieblich gehalten ist, die eine Verschieberichtung vorgebend ausgebildet ist" wird diese Aufgabe dadurch gelöst, gemäß Anspruch 1, dass die Torabdichtung an einer Horizontalführung verschieblich gehalten ist, die eine Verschieberichtung vorgebend ausgebildet ist, und die Torabdichtung in einer zur Gebäudewand parallelen Ebene verschieblich ausgebildet ist.

Dadurch kann die Torabdichtung während des Transports eines ebenerdig abgestellten Frachtbehälters vor die Gebäudeöffnung aus dem unmittelbaren Gefahrenbereich entfernt werden, indem sie in eine geeignete Richtung verschoben wirdweil die Torabdichtung an einer Linearführung in einer zur Gebäudewand parallelen Ebene verschieblich ausgebildet ist.

Wenn die Torabdichtung an einer Vertikalführung beweglich ausgebildet ist, kann sie an der Gebäudewand so weit nach oben geschoben werden, dass beispielsweise der Ausleger eines Teleskopstapelers sie mich mehr gefährden kann.

Die Handhabung wird dadurch erleichtert, dass zur Verschiebung ein Antrieb vorgesehen ist.

Fehlbedienungen werden vermieden, wenn die Torabdichtung eine Steuerung mit einem Näherungssensor aufweist, der bei Annäherung eines die Torabdichtung gefährdenden Objekts, automatisch die Torabdichtung aus dem Gefahrenbereich heraus bewegt.

Alternativ lässt sich die Torabdichtung auch in einer Ausnehmung der Gebäudewand anordnen, um sie vor Beschädigungen zu schützen.

In diesem alternativen Fall ist es vorteilhaft, wenn die Führung senkrecht zur Gebäudewand angeordnet ist, um die Torabdichtung in eine Betriebstellung an den Frachtbehälter heranzubringen.

Der Spalt zum Frachtbehälter wird dadurch überbrückt, dass die Torabdichtung eine Dichtfläche aufweist, die senkrecht zur Gebäudewand beweglich ausgebildet ist, vorzugsweise als federnde oder aufblasbare Torabdichtung ausgebildet ist.

Die Aufgabe der Erfindung wird auch durch eine Gebäudeöffnung mit einer Torabdichtung für das Beladen und/oder Entladen von Frachtbehältern, insbesondere Containern, bei der die Gebäudeöffnung im wesentlichen ebenerdig angeordnet ist und zwischen der Torabdichtung und der Gebäudewand mindestens eine Führung vorgesehen ist, in der die Torabdichtung verschieblich gehalten ist, wobei die Führung die Richtung des Verschiebeweges vorgebend ausgebildet ist, gelöst, gemäß Anspruch 9 bei der die Führung horizontal parallel zur Gebäudewand angeordnet ist. Mit Vorteil kann in diesem Fall bei Neubauten auf Rampen verzichtet werden.

Die noch verbleibenden geringen Niveauunterschiede zum Frachtbehälterboden können von einer Überladebrücke ausgeglichen werden. Meist kann sogar auf solche Überladebrücken verzichtet werden, da beim Beladen und Entladen die Federwege des Transportfahrzeugs nicht mehr zu berücksichtigen sind.

Mit Vorteil kann die Führung horizontal parallel zur Gebäudewand angeordnet sein, um beispielsweise mit einer einzigen Torabdichtung mehreren Gebäudeöffnungen bedienen zu können.

Ist oberhalb der Gebäudeöffnung ausreichend Platz, kann es vorteilhaft sein, wenn die Führung vertikal angeordnet ist.

Gebäudeöffnung abgestellt wird,
so das sich eine Öffnung des Frachtbehälters und die Gebäudeöffnung mindestens teilweise überdecken,
das Transportmittel, z.B. ein Flurförderzeug, entfernt wird,
die Torabdichtung aus einer Ruhestellung horizontal in eine die Gebäudeöffnung umrandende Betriebstellung verschoben wird,
die Torabdichtung mit einer Dichtfläche zur Anlage an den Frachtbehälter gebracht wird,
nach dem Beladen und/oder Entladen die Dichtfläche in eine vom Frachtbehälter beabstandete Stellung gebracht wird,
die Torabdichtung horizontal in eine von der Gebäudeöffnung entfernte Ruhestellung verschoben wird,
der Frachtbehälter mittels eines Transportmittels von der Gebäudeöffnung entfernt wird, gemäß Anspruch 13.

Eine bevorzugte Ausführungsform der Erfindung wird beispielhaft an Hand einer Zeichnung erläutert. Zeichnungen 1-4 zeigen Ausführungen die keinen Teil der Ausfindung sind. Die Figuren der Zeichnung zeigen im einzelnen:
- Figur 1:: einen schematisierten Vertikalschnitt durch eine Gebäudeöffnung mit einer Torabdichtung in Ruhestellung bei der Anlieferung eines Containers,
- Figur 2:: den Vertikalschnitt gemäß Figur 1 beim Absetzen eines Containers,
- Figur 3:: den Vertikalschnitt gemäß Figur 1 mit abgesetztem Container,
- Figur 4:: den Vertikalschnitt gemäß Figur 1 mit abgesetztem Container und der Torabdichtung in Betriebsposition bei angelegter Dichtfläche,
- Figur 5:: die schematische Frontansicht zweier Gebäudeöffnungen mit einer Torabdichtung an einer horizontalen Führung und
- Figur 6:: einen schematischen Vertikalschnitt durch eine Gebäudeöffnung mit einer Torabdichtung an einer zur Gebäudewand senkrechten Führung.

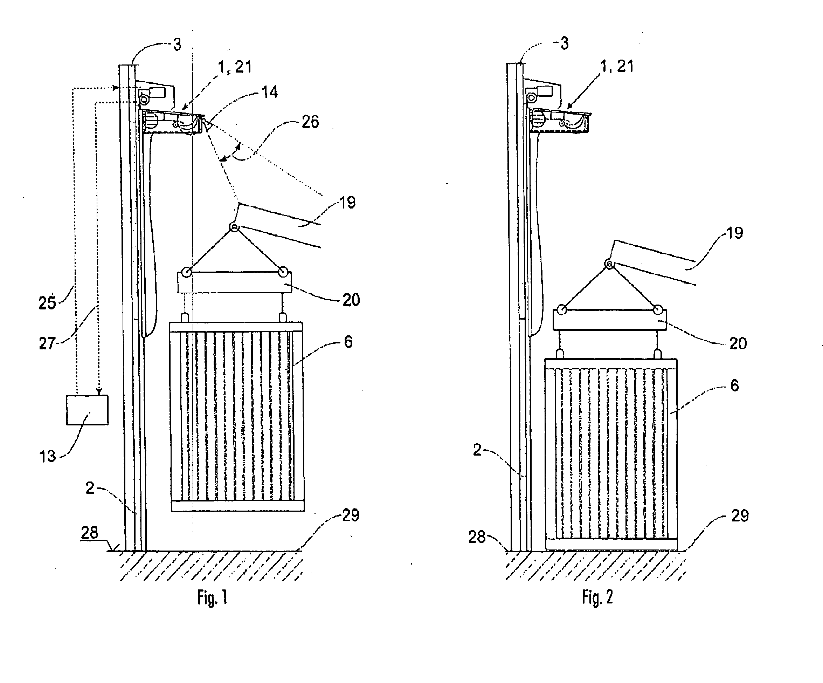

In den Figuren 1 bis 6 bezeichnet die Bezugsziffer 1 die erfindungsgemäße Torabdichtung. Die Torabdichtung ist in Figur 1 in ihrer oberen Ruhestellung 21 gezeigt. In dieser Stellung kann der Ausleger 19 eines nicht dargestellten Teleskopstapelers einen an der Traverse 20 angeschlagenen Frachtbehälter 6 in den Bereich einer in der Gebäudewand 3 vorgesehenen Gebäudeöffnung 2 anliefern.

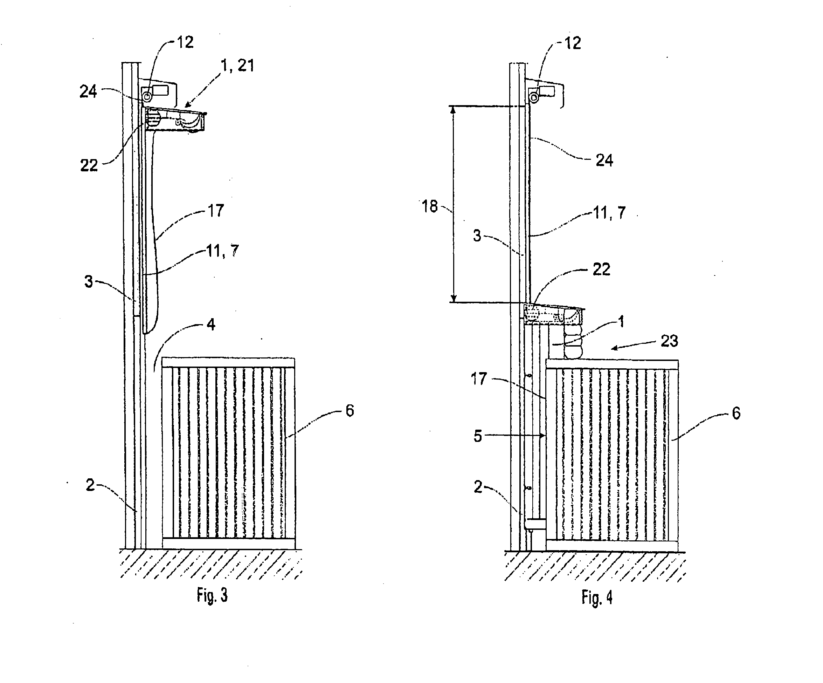

In Figur 2 ist der Frachtbehälter 6 gerade abgesetzt. Nach Abschlagen des Frachtbehälters 6 kann der Ausleger 19 mit Traverse 20 entfernt werden und für andere Aufgaben genutzt werden. Diese Situation ist in Figur 3 gezeigt. Aus der Ruhestellung 21 fährt die Torabdichtung 1 an Vertikalführungen 11 herunter in den Spalt 4 zwischen Frachtbehälter 6 und Gebäudewand 3.

Anschließend wird das Gebläse 22 der Torabdichtung 1 in Gang gesetzt, so dass sich die Torabdichtung 1 aufbläst und sich die Dichtfläche 17 gegen den Transportbehältern 6 angelegt. Die Ladeöffnung 5 des Frachtbehälters 6 wird von der Torabdichtung 1 an drei Seiten umschlossen. Der zwischen Gebäudewand 3 und Frachtbehälter 6 zuvor vorhandene Spalt 4 ist somit geschlossen.

Die in Figur 4 dargestellte Position der Torabdichtung 1 ist die Betriebstellung 23 der Torabdichtung 1. Zum Verschieben der Torabdichtung 1 aus der Ruhestellung 21 in die Betriebstellung 23 entlang ihres Verschiebeweges 18 und wieder zurück dient ein Antrieb 12, dessen Lagerkonsole fest mit der Wand zu verbunden ist und der das Seil 24, an dem die Torabdichtung 1 hängt, aufrollt beziehungsweise abrollt. Zum Schalten des Antriebs 12 und des Gebläses 22 bedient eine Steuerung 13. Diese gibt die notwendigen Schaltbefehle über Wirkverbindung 25 an den Antrieb 12 und das Gebläse 22. Ein Näherungssensor 14 erfasst in einem Winkel 26 alle Bewegungen und/oder gefährdenden Gegenstände. Das Signal des Näherungssensors 14 ist über Wirkverbindung 27 der Steuerung 13 aufgeschaltet. Solange der Näherungssensor 14 im Erfassungswinkel 26 noch gefährdende Teile erkennt, kann die Torabdichtung 1 nicht in ihre Betriebstellung 23 gefahren werden.

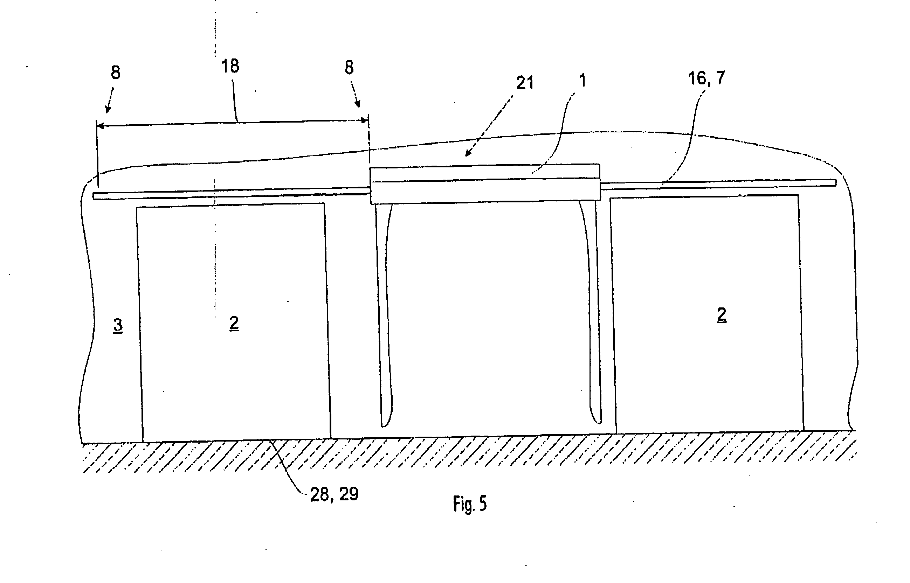

Figur 5 zeigt eine Frontansicht mit Führung des Verschiebeweges 18 gemäß Anspruch 1. Die Torabdichtung 1 ist hier in einer horizontalen Führung verschieblich gehalten. Diese Horizontalführung 16 erstreckt sich über mehrere Gebäudeöffnungen 2 in der Gebäudewand 3. Die Ruhestellung 21 der Torabdichtung ist in Figur 5 zwischen zwei Gebäudeöffnungen gezeigt. Der Verschiebeweges 18 erstreckt sich in horizontaler Richtung. Die Pfeilenden geben jeweils die Verschieberichtung 8 an. Deutlich ist zu erkennen, dass das Gebäudeniveau dem der davor liegenden Verkehrsfläche 29 entspricht.

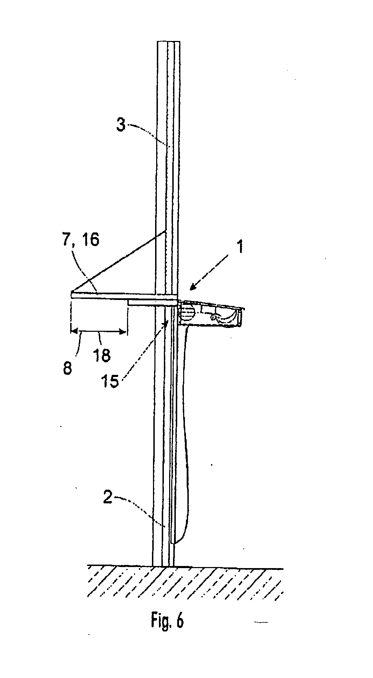

Eine bevorzugte Ausführungsform ist in Figur 6 gezeigt. Die Torabdichtung 1 kann an einer horizontalen Führung 16 durch eine Ausnehmung 15 der Gebäudewand 3 für die Zeit des Absetzens eines Frachtbehälters 6 senkrecht zur Gebäudewand 3 nach innen in das Gebäude hinein verschoben werden.

Auf diese Weise ist die Möglichkeit eröffnet worden, auch ebenerdig abgestellten Container sicher zu beladen und entladen, ohne Betriebsstörungen durch Witterungseinflüsse in Kauf nehmen zu müssen. Die ebenerdig abgestellten Frachtbehälter können auch längere Zeit als zusätzliche Lagerfläche bei der Bereitstellung von Teilen für die industrielle Produktion genutzt werden.

### BEZUGSZEICHENLISTE

- 1.: Torabdichtung
- 2.: Gebäudeöffnung
- 3.: Gebäudewand
- 4.: Spalt
- 5.: Ladeöffnung
- 6.: Frachtbehälter
- 7.: Führung
- 8.: Verschieberichtung
- 9.: Ebene
- 10.: Linearführung
- 11.: Vertikalführung
- 12.: Antrieb
- 13.: Steuerung
- 14.: Näherungssensor
- 15.: Ausnehmung
- 16.: Horizontalführung
- 17.: Dichtfläche
- 18.: Verschiebeweg
- 19.: Ausleger
- 20.: Traverse
- 21.: Ruhestellung
- 22.: Gebläse
- 23.: Betriebstellung
- 24.: Seil
- 25.: Wirkverbindung
- 26.: Winkel
- 27.: Wirkverbindung
- 28.: Gebäudeniveau
- 29.: Verkehrsfläche

## Patentansprüche

1. Torabdichtungssystem, bestehend aus einer Torabdichtung und einer Führung, insbesondere für ebenerdige Gebäudeöffnungen (2) in einer Gebäudewand (3), zum Abdichten eines Spaltes (4) zwischen der Gebäudeöffnung (2) und einer Ladeöffnung (5) eines Frachtbehälters (6), vorzugsweise eines Containers, wobei die Torabdichtung (1) in der Führung (7, 16) verschieblich gehalten ist, die eine Verschieberichtung (8) vorgebend ausgebildet ist, **dadurch gekennzeichnet, dass** die Torabdichtung (1) in einer zur Gebäudewand (3) parallelen Ebene (9) an einer Horizontalführung (16) verschieblich ausgebildet ist.

2. Torabdichtung nach Anspruch 1, **dadurch gekennzeichnet, dass** sie an einer Vertikalführung (11) beweglich ausgebildet ist.

3. Torabdichtung nach einem oder mehreren der vorhergehenden Ansprüche, **dadurch gekennzeichnet, dass** zur Verschiebung ein Antrieb (12) vorgesehen ist.

4. Torabdichtung nach einem oder mehreren der vorhergehenden Ansprüche, **dadurch gekennzeichnet, dass** sie eine Steuerung (13) mit einem Näherungssensor (14) aufweist.

5. Torabdichtung nach Anspruch 1, 3 oder 4, **dadurch gekennzeichnet, dass** sie in einer Ausnehmung (15) der Gebäudewand (3) angeordnet ist.

6. Torabdichtung nach einem oder mehreren der vorhergehenden Ansprüche, **dadurch gekennzeichnet, dass** die Führung (7) senkrecht zur Gebäudewand (3) angeordnet ist.

7. Torabdichtung nach einem oder mehreren der vorhergehenden Ansprüche, **dadurch gekennzeichnet, dass** sie an einer Horizontalführung (16) verschieblich ausgebildet ist.

8. Torabdichtung nach einem oder mehreren der vorhergehenden Ansprüche, **dadurch gekennzeichnet, dass** sie eine Dichtfläche (17) aufweist, die senkrecht zur Gebäudewand (3) beweglich ausgebildet ist, vorzugsweise als federnde oder aufblasbare Torabdichtung ausgebildet ist.

9. Gebäudeöffnung mit einer Torabdichtung (1) für das Be- und/oder Entladen von Frachtbehältern (6), insbesondere Containern, wobei die Gebäudeöffnung (2) im wesentlichen ebenerdig angeordnet ist und zwischen der Torabdichtung (1) und der Gebäudewand (3) mindestens eine Führung (7) vorgesehen ist, in der die Torabdichtung (1) verschieblich gehalten ist, wobei die Führung (7) die Richtung des Verschiebeweges (18) vorgebend ausgebildet ist, **dadurch gekennzeichnet, dass** die Führung (7) horizontal parallel zur Gebäudewand angeordnet ist.

10. Gebäudeöffnung nach Anspruch 9, **dadurch gekennzeichnet, dass** sie eine einen Niveauunterschied zum Frachtbehälterboden ausgleichende Überladebrücke aufweist.

11. Gebaudeöffnung nach Anspruch 9 oder 10, **dadurch gekennzeichnet, dass** sie einen Antrieb (12) für das Verschieben der Torabdichtung aufweist.

12. Gebäudeöffnung nach einem oder mehreren der Ansprüche 9 bis 11, **dadurch gekennzeichnet, dass** die Torabdichtung (1) aufblasbar ausgebildet ist.

13. Verfahren zum Beladen und/oder Entladen eines ebenerdig abgestellten Frachtbehälters, insbesondere eines Containers, **dadurch gekennzeichnet, dass** ein zu be- und/oder entladender Frachtbehälter mittels eines Transportmittels, vorzugsweise eines Teleskopstaplers, vor der Gebäudeöffnung abgestellt wird, so dass sich eine Öffnung des Frachtbehälters und die Gebäudeöffnung mindestens teilweise überdecken, das Transportmittel, z.B. ein Flurförderzeug, entfernt wird, eine Torabdichtung aus einer Ruhestellung horizontal in eine die Gebäudeöffnung umrandende Betriebstellung verschoben wird, die Torabdichtung mit einer Dichtfläche zur Anlage an den Frachtbehälter gebracht wird, nach dem Beladen und/oder Entladen die Dichtfläche in eine vom Frachtbehälter beabstandete Stellung gebracht wird, die Torabdichtung horizontal in eine von der Gebäudeöffnung entfernte Ruhestellung verschoben wird, der Frachtbehälter mittels eines Transportmittels von der Gebäudeöffnung entfernt wird.

## Claims

1. A door sealing system, comprising a door seal and a guide, in particular for ground-level building openings (2) in a building wall (3), for sealing a gap (4) between said building opening (2) and a loading/unloading opening (5) of a freight container (6), preferably an intermodal container, wherein said door seal (1) is slidably retained in said guide (7, 16), which guide is configured to define a sliding direction, **characterized in that** said door seal (1) is formed to extend in a plane (9) which is parallel with respect to said building wall (3) and is configured to be slidably movable at a horizontal guide (16).

2. A door seal according to claim 1, **characterized in that** it is configured to be movable at a vertical guide (11).

3. A door seal according to any of the preceding claims, **characterized by** a drive (12) provided for effecting said sliding motion.

4. A door seal according to any of the preceding claims, **characterized in that** it has a controller (13) including a proximity sensor (14).

5. A door seal according to one of claims 1, 3 or 4, **characterized in that** it is located in a recess (15) of said building wall (3).

6. A door seal according to any of the preceding claims, **characterized in that** said guide (7) is disposed perpendicular to said building wall (3).

7. A door seal according to any of the preceding claims, **characterized in that** it is configured to be slidably movable at a horizontal guide (16).

8. A door seal according to any of the preceding claims, **characterized in that** it has a sealing surface (17) which is configured to be movable perpendicular to said building wall (3), preferably as a resilient or inflatable door seal.

9. A building opening having a door seal (1) for loading and/or unloading freight containers (6), in particular intermodal containers, wherein said building opening (2) is essentially ground-level and at least one guide (7) is provided between said door seal (1) and a building wall (3) to slidably retain said door seal (1), wherein said guide (7) is configured to define a direction of a sliding path (18), **characterized in that** said guide (7) is disposed horizontally and parallel to said building wall.

10. A building opening according to claim 9, **characterized in that** it has a dock leveller for overcoming a difference in level with respect to a freight container bottom.

11. A building opening according to claim 9 or 10, **characterized in that** it has a drive (12) for slidably moving said door seal.

12. A building opening according to any of claims 9 to 11, **characterized in that** said door seal (1) is configured to be inflatable.

13. A process for loading and/or unloading a freight container, in particular an intermodal container, put down on ground level, **characterized by** putting down a freight container to be loaded and/or unloaded in front of a building opening by a transport means, preferably a telescopic lift truck, so that an opening of said freight container and said building opening overlap at least partially, removing a transport means, for example a floor conveyor, slidably moving a door cover horizontally from a resting position to an operating position at the periphery of said building opening, abutting a sealing surface of a door seal at said freight container, upon completion of said loading/unloading operation disengaging said sealing surface from said freight container, slidably moving said door seal horizontally to a resting position away from said building opening, removing said freight container from said building opening by a transport means.

## Revendications

1. Système d'étanchéité de porte comprenant un sas d'étanchéité de porte et un guidage, destiné en particulier à des ouvertures de bâtiments (2) au niveau du sol dans une paroi de bâtiment (3), pour rendre étanche une fente (4) entre l'ouverture de bâtiment (2) et une ouverture de chargement (5) d'un conteneur de fret (6), en particulier un conteneur, le sas d'étanchéité de porte (1) étant logé de façon déplaçable dans le guidage (7, 16) qui détermine une direction de déplacement (8), **caractérisé en ce que** le sas d'étanchéité de porte (1) peut être déplacé dans un plan parallèle (9) à la paroi du bâtiment (3) à l'aide d'un guidage horizontal (16).

2. Sas d'étanchéité de porte selon la revendication 1, **caractérisé en ce qu**'il peut être déplacé le long d'un guidage vertical (11).

3. Sas d'étanchéité de porte selon l'une ou plusieurs des revendications précédentes, **caractérisé en ce qu**'un entraînement (12) est prévu assurant le déplacement.

4. Sas d'étanchéité de porte selon l'une ou plusieurs des revendications précédentes, **caractérisé en ce qu**'il présente une commande (13) avec un détecteur de proximité (14).

5. Sas d'étanchéité de porte selon l'une des revendications 1, 3 ou 4, **caractérisé en ce qu**'il est disposé dans un évidement (15) pratiqué dans la paroi du bâtiment (3).

6. Sas d'étanchéité de porte selon l'une ou plusieurs des revendications précédentes, **caractérisé en ce que** le guidage (7) est disposé perpendiculairement à la paroi du bâtiment (3).

7. Sas d'étanchéité de porte selon l'une ou plusieurs des revendications précédentes, **caractérisé en ce qu'**il peut être déplacé le long d'un guidage horizontal (16).

8. Sas d'étanchéité de porte selon l'une ou plusieurs des revendications précédentes, **caractérisé en ce qu**'il présente une surface d'étanchéité (17) pouvant être déplacée perpendiculairement à la paroi du bâtiment (3) et étant conçue de préférence comme sas d'étanchéité de porte à ressort ou gonflable.

9. Ouverture de bâtiment avec un sas d'étanchéité de porte (1) pour le chargement et/ou le déchargement de conteneurs de fret, en particulier de conteneurs, l'ouverture du bâtiment (2) étant disposée essentiellement au niveau du sol, et au moins un guidage (7) étant prévu entre le sas d'étanchéité de porte (1) et la paroi du bâtiment (3), dans lequel le sas d'étanchéité (1) peut être déplacé et qui détermine la direction du déplacement (18), **caractérisée en ce que** le guidage (7) est disposé dans le sens horizontal parallèlement à la paroi du bâtiment.

10. Ouverture de bâtiment selon la revendication 9, **caractérisée en ce qu**'elle présente un pont de transbordement compensant une différence de niveau au fond du conteneur de fret.

11. Ouverture de bâtiment selon l'une des revendications 9 ou 10, **caractérisée en ce qu**'elle présente un entraînement (12) pour le déplacement du sas d'étanchéité de porte.

12. Ouverture de porte selon l'une ou plusieurs des revendications 9 à 11, **caractérisée en ce que** le sas d'étanchéité (1) est un sas gonflable.

13. Procédé pour le chargement et/ou le déchargement d'un conteneur de fret déposé au niveau du sol, en particulier un conteneur, **caractérisé en ce qu**'un conteneur de fret à charger et/ou à décharger est déposé devant l'ouverture du bâtiment à l'aide d'un moyen de transport, de préférence un élévateur téléscopique, de sorte qu'une ouverture du conteneur de fret et l'ouverture du bâtiment se chevauchent au moins partiellement, le moyen de transport, par exemple un chariot de manutention, est retiré, un sas d'étanchéité de porte est déplacé horizontalement à partir d'une position de repos en une position d'utilisation entourant l'ouverture du bâtiment, une surface d'étanchéité du sas d'étanchéité de porte est appuyée contre le conteneur de fret, la surface d'étanchéité, après le chargement et/ou le déchargement, est retirée du conteneur de fret, le sas d'étanchéité de porte est déplacé horizontalement dans une position de repos distante de l'ouverture du bâtiment et le conteneur de frêt est éloigné de l'ouverture du bâtiment à l'aide d'un moyen de transport.
